# EUROPEAN PATENT SPECIFICATION

(11) **EP 4 071 453 B1**
(45) Date of publication and mention of the grant of the patent: **08.07.2026**
(21) Application number: 22166721.5
(22) Date of filing: 05.04.2022
(51) Int. Cl.: G01M 1/22, G01M 1/28, G01M 15/14

(54) **METHODS OF IDENTIFYING UNBALANCE OF ENGINE ROTORS BASED ON ENGINE VIBRATION**
VERFAHREN ZUM IDENTIFIZIEREN DER UNWUCHT VON MOTORROTOREN BASIEREND AUF MOTORVIBRATIONEN
PROCÉDÉS D'IDENTIFICATION DE DÉSÉQUILIBRE DE ROTORS DE MOTEUR BASÉS SUR LA VIBRATION DU MOTEUR

(30) Priority: 08.04.2021 IN 202111016542
(43) Date of publication of application: 12.10.2022
(73) Proprietor: General Electric Company, Evendale, OH 45215 (US)
(72) Inventor: GOPINATHAN, Manoj Kunnil, 560066 Bengaluru (IN); KADAKOL, Chidanand, 560066 Bengaluru (IN); NAYANI, Manoj, 560066 Bengaluru (IN); GANNAMANI, Prabhu Prasad, 560066 Bengaluru (IN); DUDHALE, Kanahayya, 560066 Bengaluru (IN)
(74) Representative: Openshaw & Co.

(56) References cited:
- EP-A1- 3 339 830
- US-A1- 2018 354 646

## Description

### FIELD

The present disclosure relates to methods and systems for identifying sources of unbalance in rotor systems of jet engines and determining corrective measures at an overhaul shop or a maintenance, repair, overhaul (MRO) shop.

### BACKGROUND

Rotating machinery, such as that found in the core of an aircraft jet engine, can be highly sensitive to small imperfections in the balance of its rotating parts. The operation of such machinery with unbalanced components can result in, for example, the uneven distribution of forces, damage to engine components, and undue wear of components in the ordinary course of use. In jet engines, such imperfections can cause the centers of mass of the compressor and turbine assemblies to become misaligned with the geometric axis of rotation of the assembly. In the case of jet engines, vibrations resulting from unbalanced components can be transmitted to adjacent portions of the aircraft and can result in noise and passenger discomfort, and cause increased wear, fatigue and damage to engine components. Conventional methods of addressing unbalance in jet engines is time consuming, resulting in increased time and expenses associated with engine repair.

There exists therefore a need for a method of accurately and effectively identifying sources of unbalance in aircraft jet engines before it arrives at MRO shop and determining appropriate corrective measures. US2018/354646 discloses predictive models for diagnosing the unbalance state in an aircraft engine such as a jet engine based on engine vibrations and other known and/or determinable parameters, and methods for developing the predictive model and using the model to identify aircraft engine unbalance.

### SUMMARY

An invention is set out in the claims. Disclosed herein are embodiments of a predictive model for diagnosing the unbalance state in a jet engine based on engine vibrations and operational parameters at MRO.

Also disclosed are methods for developing the models that identify jet engine unbalance sources and determine appropriate corrective measures.

In one embodiment disclosed herein, a method for developing a predictive diagnostic model, comprises: (a) measuring a core vibration data set and an operational parameter data set associated with a jet engine; (b) storing the core vibration data set and the operational parameter data set; (c) identifying the unbalance state associated with the core vibration data set and the operational parameter data set, in combination; (d) repeating steps (a)-(c) until enough data sets have been recorded to generate a predictive model for determining unbalance state; and (e) Use the predictive model from step (d) for determining unbalance states from measured core vibration and operational parameters data.

In another embodiment disclosed herein, a method for identifying the unbalance state of a jet engine comprising: (a) generating one or more linear vibration ratio-unbalance relationship groups for different operational parameter sets, based on a database; (b) generating one or more individual analytic models for each linear group of vibration ratio-unbalance data; (c) recording a core vibration signature and operational parameter set for a jet engine; (d) inputting the core vibration signature and operational parameter set into the one or more individual analytic models of step (b); (e) identifying the best fit linear group based on operational parameters; (f) identifying the likely unbalance location and magnitude by comparing measured core vibration signatures to historical vibration signatures recorded for the best fit linear group; and (g) applying one or more weights to at least one of a compressor or turbine or combination of both in the jet engine in-line with allowable unbalance correction limits of the module.

Also disclosed herein are embodiments of a model for predictively diagnosing the unbalance state of a jet engine, comprising: a database consists of correlated sets of core vibration data, key engine operational parameters, and engine unbalance states; an input function configured to allow a user to enter: core vibration input data; engine operational parameters; and an tolerance function configured to identify one or more engine unbalance states, based on the core vibration data and key engine operational parameters.

The foregoing and other objects, features, and advantages of the invention will become more apparent from the following detailed description, which proceeds with reference to the accompanying figures.

### BRIEF DESCRIPTION OF THE DRAWINGS

A full and enabling disclosure of the preferred embodiments directed to one of ordinary skill in the art, is set forth in the specification, which makes reference to the appended figures, in which:
FIG. 1 illustrates a cross-section view of an exemplary jet engine;
FIGS. 2A and 2B are flow charts illustrating exemplary methods of identifying unbalance of engine rotors based on engine vibration;
FIG. 3 is a table relating to an exemplary validation process for identifying unbalance states of engine rotors;
FIG. 4 illustrates an exemplary validation process that includes a comparison of identified core vibration ratios to actual core vibration ratios for simulated unbalance states
FIG. 5 illustrates an exemplary validation process that includes user input of vibration and/or vibration ratio data;
FIG. 6 is a flow chart illustrating an exemplary method of identifying unbalance of engine rotors based on engine vibration; and
FIG. 7 illustrates an exemplary embodiment showing a plurality of linear groups.

### DETAILED DESCRIPTION

Disclosed herein are embodiments of various methods and systems of identifying the source of rotor unbalance in jet engines and determining appropriate corrective measures based on measured vibrations in those engines and identified operating parameters.

In some embodiments, the methods and systems disclosed herein generally comprise of receiving information on engine vibrations from one or more sensors, identifying engines with vibration levels above a predetermined tolerance, and determining the unbalance state of those engines based on vibration levels and operation parameters.

Reference now will be made in detail to embodiments of the disclosed technology, one or more examples of which are illustrated in the drawings. Each example is provided by way of explanation of the disclosed technology, not limitation of the disclosure. **In** fact, it will be apparent to those skilled in the art that various modifications and variations can be made in the present disclosure without departing from the scope or spirit of the disclosure. For instance, features illustrated or described as part of one embodiment can be used with another embodiment to yield a still further embodiment. Thus, it is intended that the present disclosure covers such modifications and variations as come within the scope of the appended claims and their equivalents.

The term "shipping limit," "vibration tolerance" and "maximum vibration limit" are used herein to refer to a predetermined maximum amount of vibration, as measured by one or more vibration sensors, for a specific jet engine in good operating condition. The terms "core vibration ratio" and "core vibe ratio" are used herein to refer to the ratio of a measured vibration state to a shipping limit of a turbofan engine.

The word "exemplary" is used herein to mean "serving as an example, instance, or illustration." Any implementation described herein as "exemplary" is not necessarily to be construed as preferred or advantageous over other implementations.

As used herein, the terms "first", "second", and "third" may be used interchangeably to distinguish one component from another and are not intended to signify location or importance of the individual components.

The terms "forward" and "aft" refer to relative positions within a jet engine or vehicle and refer to the normal operational altitude of jet engine or vehicle. For example, with regards to a jet engine, forward refers to a position closer to an engine inlet and aft refers to a position closer to an engine nozzle or exhaust. The terms "upstream" and "downstream" refer to the relative direction with respect to fluid flow in a fluid pathway. For example, "upstream" refers to the direction from which the fluid flows, and "downstream" refers to the direction to which the fluid flows.

Additionally, the terms "low," "high," or their respective comparative degrees (e.g., lower, higher, where applicable) each refer to relative speeds within a jet engine, unless otherwise specified. For example, a "low-pressure turbine" operates at a pressure generally lower than a "high-pressure turbine." Alternatively, unless otherwise specified, the aforementioned terms may be understood in their superlative degree. For example, a "low-pressure turbine" may refer to the lowest maximum pressure turbine within a turbine section, and a "high-pressure turbine" may refer to the highest maximum pressure turbine within the turbine section.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise. Approximating language, as used herein throughout the specification and claims, is applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values. If not otherwise stated, the approximating language should be understood to refer to a 10 percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Undesired vibrational behavior of aircraft jet engines can sometimes be reduced by the addition/removal of balancing masses to one or more components of the engine core to reposition the centers of mass of the compressor and turbine assemblies. To perform this balancing, misaligned aircraft jet engines are generally removed from active operation so that the precise nature of the misalignment can be determined, and appropriate corrective steps taken.

In the case of aircraft jet engines, the total observed rotational misalignment of the engine can include individual misalignments in many engine components. Identifying the exact sources of the unbalance can involve complicated and often time-intensive trial-and-error process. This process can cause significant losses in time of engine operation as well as a great expenditure of skilled technician time required to analyze, diagnose, and correct the unbalance in the aircraft turbine engine.

The methods of identifying unbalance states in high pressure rotating machinery disclosed herein can be used with various embodiments of jet engines. Jet engines for use with the presently disclosed unbalance state identification methods can have a core engine having a low-pressure compressor (booster), a high-pressure compressor, a combustion section, a high-pressure turbine, and a low-pressure turbine. The core engine may rest within a substantially tubular casing. The jet engines may further comprise a fan section upstream of the core engine, and an exhaust downstream of the core engine.

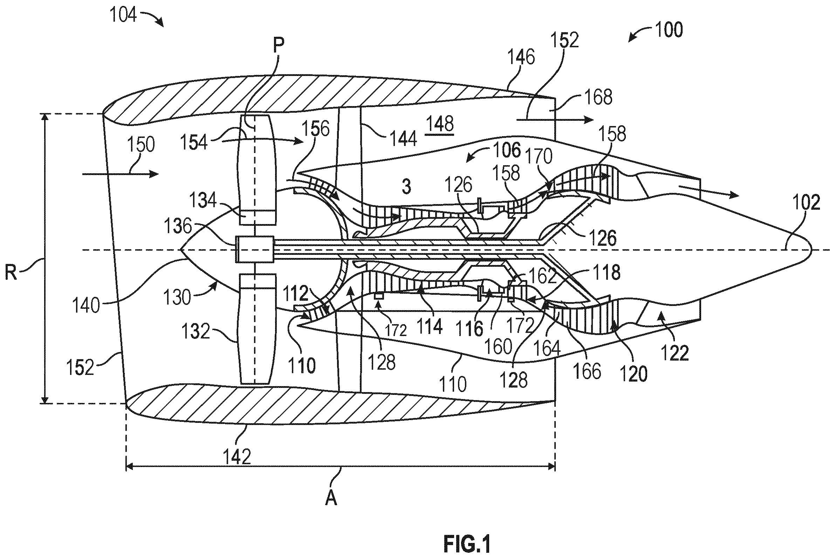

For example, FIG. 1 depicts a cross-section view of a jet engine 100 according to one exemplary embodiment suitable for use with the unbalance state identification methods of the present disclosure. More particularly, the gas turbine engine shown in FIG. 1 is a high-bypass turbofan jet engine 100, referred to herein as "turbofan engine 100." As shown in FIG. 1, the turbofan engine 100 defines an axial direction A (extending parallel to a longitudinal centerline 102 provided for reference) and a radial direction R (extending perpendicular to the axial direction A). In general, the turbofan 100 includes a fan section 104 and a core engine 106 disposed downstream from the fan section 104. Although FIG. 1 depicts a direct drive turbofan, it should be understood that other engine architectures are possible, such as a geared architecture in which a plurality of gears couple a gas turbine shaft to a fan shaft.

The exemplary core engine 106 depicted generally includes a substantially tubular outer casing that defines an annular inlet 110. The outer casing encases, in serial flow relationship, a compressor section including a booster or low-pressure (LP) compressor 112 and a high-pressure (HP) compressor 114; a combustion section 116; a turbine section including a high-pressure (HP) turbine 118 and a low-pressure (LP) turbine 120; and a jet exhaust nozzle section 122. A high-pressure (HP) shaft or spool drivingly connects the HP turbine 118 to the HP compressor 114. A low-pressure (LP) shaft or spool 126 drivingly connects the LP turbine 120 to the LP compressor 112. Additionally, the compressor section, combustion section 116, and turbine section together define at least in part a core air flow path 128 extending therethrough.

For the embodiment depicted, the fan section 104 may include a variable pitch fan 130 having a plurality of fan blades 132 coupled to a disk 134 in a spaced apart manner. As depicted, the fan blades 132 extend outwardly from disk 134 generally along the radial direction R. Each fan blade 132 is rotatable relative to the disk 134 about a pitch axis P by virtue of the fan blades 132 being operatively coupled to a suitable actuation member 136 configured to collectively vary the pitch of the fan blades 132. The fan blades 132, disk 134, and actuation member 136 are together rotatable about the longitudinal axis 102 by LP shaft 126.

Referring still to the exemplary embodiment of FIG. 1, the disk 134 is covered by rotatable front nacelle 140 aerodynamically contoured to promote an airflow through the plurality of fan blades 132. Additionally, the exemplary fan section 104 includes an annular fan casing or outer nacelle 142 that circumferentially surrounds the fan 130 and/or at least a portion of the core engine 106. The nacelle 142 is, for the embodiment depicted, supported relative to the core engine 106 by a plurality of circumferentially spaced outlet guide vanes 144. Additionally, a downstream section 146 of the nacelle 142 extends over an outer portion of the core engine 106 so as to define a bypass airflow passage 148 therebetween.

During operation of the turbofan engine 100, a volume of air 150 enters the turbofan 100 through an associated inlet 152 of the nacelle 142 and/or fan section 104. As the volume of air 150 passes across the fan blades 132, a first portion of the air 150 as indicated by arrows 154 is directed or routed into the bypass airflow passage 148 and a second portion of the air 150 as indicated by arrow 156 is directed or routed into the LP compressor 112. The ratio between the first portion of air 154 and the second portion of air 156 is commonly known as a bypass ratio. The pressure of the second portion of air 156 is then increased as it is routed through the high-pressure (HP) compressor 114 and into the combustion section 116, where it is mixed with fuel and burned to provide combustion gases 158.

The combustion gases 158 are routed through the HP turbine 118 where a portion of thermal and/or kinetic energy from the combustion gases 158 is extracted via sequential stages of HP turbine stator vanes 160 that are coupled to the outer casing 108 and HP turbine rotor blades 162 that are coupled to the HP shaft or spool 124, thus causing the HP shaft or spool 124 to rotate, thereby supporting operation of the HP compressor 114. The combustion gases 158 are then routed through the LP turbine 120 where a second portion of thermal and kinetic energy is extracted from the combustion gases 158 via sequential stages of LP turbine stator vanes 164 that are coupled to the outer casing 108 and LP turbine rotor blades 166 that are coupled to the LP shaft or spool 126, thus causing the LP shaft or spool 126 to rotate, thereby supporting operation of the LP compressor 112 and/or rotation of the fan 130.

The combustion gases 158 are subsequently routed through the jet exhaust nozzle section 322 of the core engine 106 to provide propulsive thrust. Simultaneously, the pressure of the first portion of air 154 is substantially increased as the first portion of air 154 is routed through the bypass airflow passage 148 before it is exhausted from a fan nozzle exhaust section 168 of the turbofan 100, also providing propulsive thrust. The HP turbine 118, the LP turbine 120, and the jet exhaust nozzle section 122 at least partially define a hot gas path 170 for routing the combustion gases 158 through the core engine 106.

Unbalance in the jet engine 100 can occur when the center of mass of any of the compressors 112, 114, or the turbines 118, 120 does not match the geometric axis of rotation of the core engine 106. This may be caused by mass imbalance in any of the core engine 106 components, such as components in the low-pressure compressor 112, the high-pressure compressor 114, the high-pressure turbine 118, or the low-pressure turbine 120. Such mass imbalances can result from imperfections in the manufacture of the engine, damage to one or more of the engine components such as from foreign object intake, ordinary wear of engine components, or any other cause sufficient to alter the mass, size, shape, or positioning of a jet engine component.

In addition, unbalance can occur from other rotating components of the turbofan, including the fan blades 132 and/or fan disk 134. It should be understood that the identification of unbalance in other rotating components, such as the fan blades and/or fan disk, can be achieved in a similar manner to the unbalance in core engine components (e.g., compressors and/or turbines) discussed herein.

When components in the jet engine 100 become unbalanced, the engine will experience vibrations that can cause it to suffer damage in use. Vibrations from unbalanced engine components can cause passenger discomfort and result in damaged turbine or compressor components, increased part distortion from unbalanced stresses, and heightened metal fatigue of engine components.

One or more vibration sensors 172 can be installed on the jet engine 100 to obtain data regarding vibrations of different engine components. Vibration data can include, for example, location, magnitude and phase of vibrations measured by each vibration sensor. FIG. 1 illustrates vibration sensors 172 coupled to the engine 100 at the high-pressure compressor 114 and high-pressure turbine 116 to measure vibrations associated with each of those engine components. It should be understood that additional vibration sensors can be provided, either to provide additional vibrations measurements of the high-pressure compressor and turbine or to provide vibration measurements of other components of the engine 100 (e.g., the low-pressure compressor and/or turbine). One or more vibration sensors can also be provided in proximity of other rotating components, such as the fan blades and/or fan disk discussed above.

Diagnosing and correcting the source of the engine unbalance generally includes removing the jet engine from the aircraft, and repairing the damage that is causing the unbalance and/or attaching corrective weights to the compressors 112, 114 and/or the turbines 118, 120 to bring the center of mass of the compressors and/or turbines in line with the geometric axis of rotation of core 106. Engines with corrective weights attached can then be tested at the full operational range of rotational speeds to determine if the adjustments to the compressors 112, 114 and/or the turbines 118, 120 have been effective. If they have not, corrective masses may be increased, decreased, and/or repositioned as needed.

However, because the measured vibration of a turbine engine includes contributions of the rotational characteristics of both compressors 112, 114 and turbines 118, 120, it is frequently not obvious whether an engine core unbalance is caused by an unbalance of one or more compressors, one or more turbines, or both. Thus, the correction of an engine having vibration levels outside of acceptable limits often requires the inspection of both compressor and turbine balancing, and sometimes experimental attempts to rebalance first one component and then another.

In some embodiments disclosed herein, the method of diagnosing the source of a jet engine unbalance can include the development of a relationship model between measured vibrations and unbalances. The model can be developed from data gathered while an aircraft is in operation and compared against observed unbalance states. This model may then be used to determine unbalance states in engines with measured vibrations that exceed predetermined maximum vibration limits. Although the methods disclosed herein are described in connection with an exemplary jet engine, it should be understood that the methods can be applicable to other gas turbine engines as well.

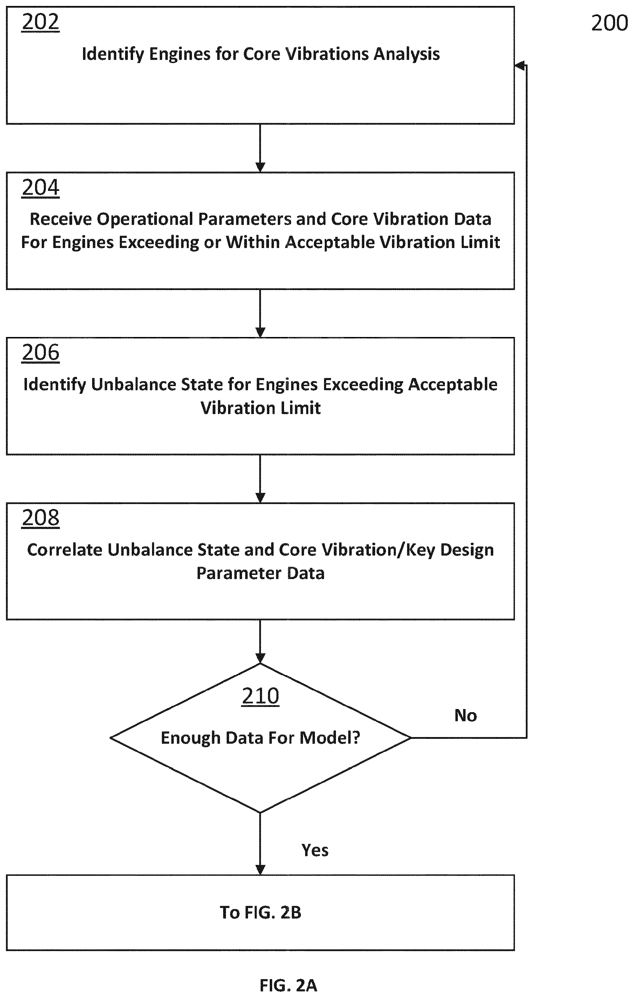

In one embodiment of the method disclosed herein, illustrated in FIG. 2A, the method can comprise gathering vibration data while an aircraft having one or more jet engines 100 is operational. During operational use of jet engine 100 core vibration data can be acquired from one or more vibration sensors installed thereon. Vibration data can include location, magnitude and phase of vibrations measured by each vibration sensor. Vibration data can be stored in a data recorder such as a digital flight data recorder or airborne vibration monitor, or transmitted to a recording station (e.g., to a ground-based recording station). Engines with vibration levels in excess of pre-established acceptable vibration limits (sometimes called shipping limits), can be identified in this way.

Data may also be collected on additional operational parameters of the jet engine 100. Such operational parameters may include, for example inlet temperature, outlet temperature, supply pressure, physical properties, chemical properties, ambient temperature, combustor temperature, compressor exit pressure, compressor exit temperature, high pressure rotor speed, low pressure rotor speed, damper manufacturing variation, bearing manufacturing variation, damper operating conditions, bearing operating conditions, engine operator, region of engine operation, and altitude. This data can be measured simultaneously with the corresponding set of vibration data. Alternatively, the data can be measured at different time periods and associated together thereafter. For operational parameters that experience a range of operation conditions, specific operating conditions and/or maximum or minimum values can be selected. For example, compressor exit temperature can be calculated as a maximum temperature during operation and/or it can be selected for a particular operating condition (e.g., cruise, SLTO).

**Table 1 below shows a list of relevant operational parameters that can be considered in identifying unbalance conditions as described herein.**

| **Engine component specific** | **General** | **Flight Operation** |
|---|---|---|
| Inlet temperature | Physical properties | Engine operator |
| Outlet temperature | Chemical properties | Region of engine operation |
| Supply pressure | Ambient temperature | Altitude |
| Combustor temperature | | |
| Compressor exit pressure | | |
| Compressor exit temperature | | |
| Damper manufacturing variation | | |
| Bearing manufacturing variation | | |
| Damper operating conditions | | |
| Bearing operating conditions | | |
| Low pressure rotor speed | | |
| High Pressure rotor speed | | |

When an engine is identified for core vibration analysis according to process block 202, the combined core vibration data and operational parameter data can be stored for modeling purposes (process block 204). As indicated above, this storage may occur on the aircraft, for example on a digital flight data recorder or airborne vibration monitor, or remotely such as by the transfer of data to remote locations such as an aircraft Maintenance, Repair, and Overhaul (MRO) facility.

Upon identification of a jet engine 100 that exceeds the pre-established acceptable vibration limits, the jet engine 100 can then be removed from the aircraft, for example, by an MRO technician, and the source of the engine unbalance responsible for the measured core vibration levels (e.g., LP compressor, HP compressor, HP turbine, and LP turbine) can be determined, for example by using diagnosis techniques previously discussed (process block 206). In some embodiments, the measured vibration data and operational parameter data can then be associated with a corresponding engine unbalance state (process block 208), and the engine data-unbalance state data can be saved for later use.

When insufficient data is available for the development of a predictive diagnostic model according to method 200, additional data may be gathered according to the process previously discussed (decision block 210). However, if sufficient data has been gathered to support the development of a predictive diagnostic model according to method 200 (decision block 210), accumulated vibration data-unbalance state pairings can then used to construct a predictive correlating measured vibrations to expected engine unbalance states, once a sufficient amount of vibration data-unbalance state data is available.

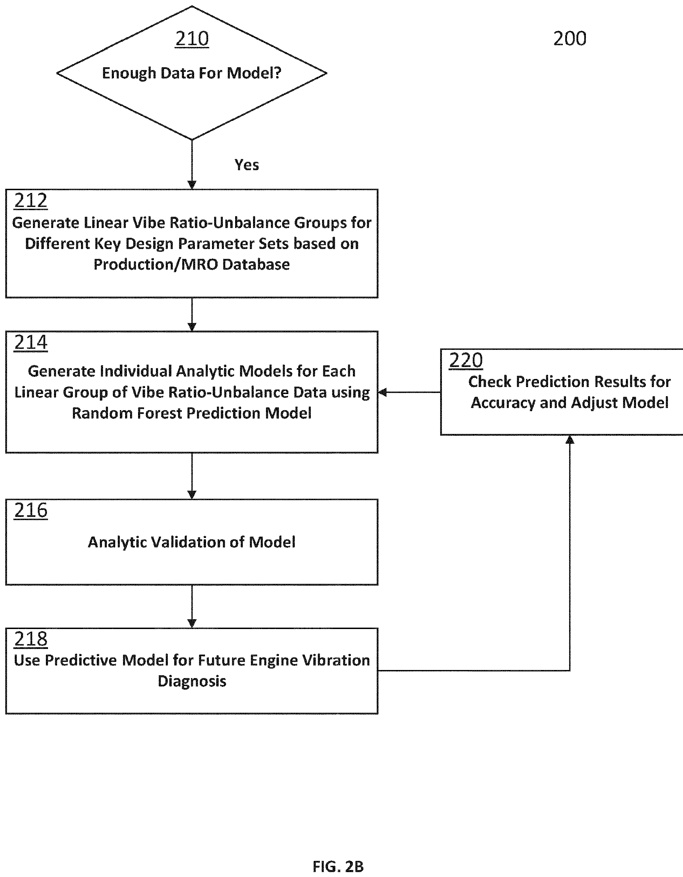

In the embodiment with continuing illustration shown in FIG. 2B, the model can be constructed from data on core vibration, operational parameters, and unbalance states. Construction of the model can, in one exemplary embodiment, comprise generating linear groups of vibration ratio-unbalance state data pairings for each given combination of operational parameters in an MRO database (process block 212). For each linear group of vibration ratio-unbalance state data, individual analytical models can be developed to allow for operational parameter-specific identifications of unbalance states (process block 214). In one particular favored embodiment, the individual analytical models can employ random forest modeling methods.

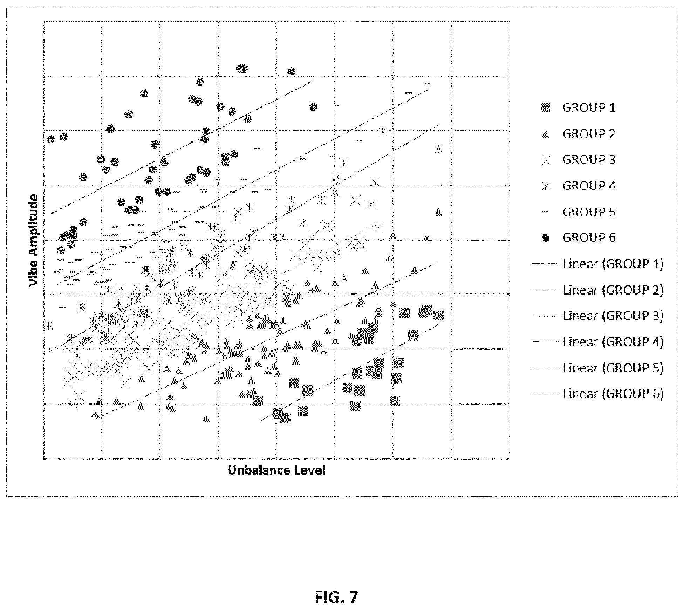

FIG. 7 illustrates an exemplary embodiment showing a plurality of linear groups: Group 1, Group 2, Group 3, Group 4, Group 5, and Group 6. Each linear group reflects vibration ratio-unbalance state data pairings for combinations of operational parameters obtained from an MRO database. Thus, for example, Group 1 may include a certain engine (e.g., Engine A) operating in a certain region at a certain set of operational parameters received and inputted into the model. The other groups reflect similar inputs that provide different linear groups. Different linear groups can reflect different engines, different regions, and/or different operational parameters. In some cases, the same engine operating in different regions or at different operational parameters can result in different linear groups.

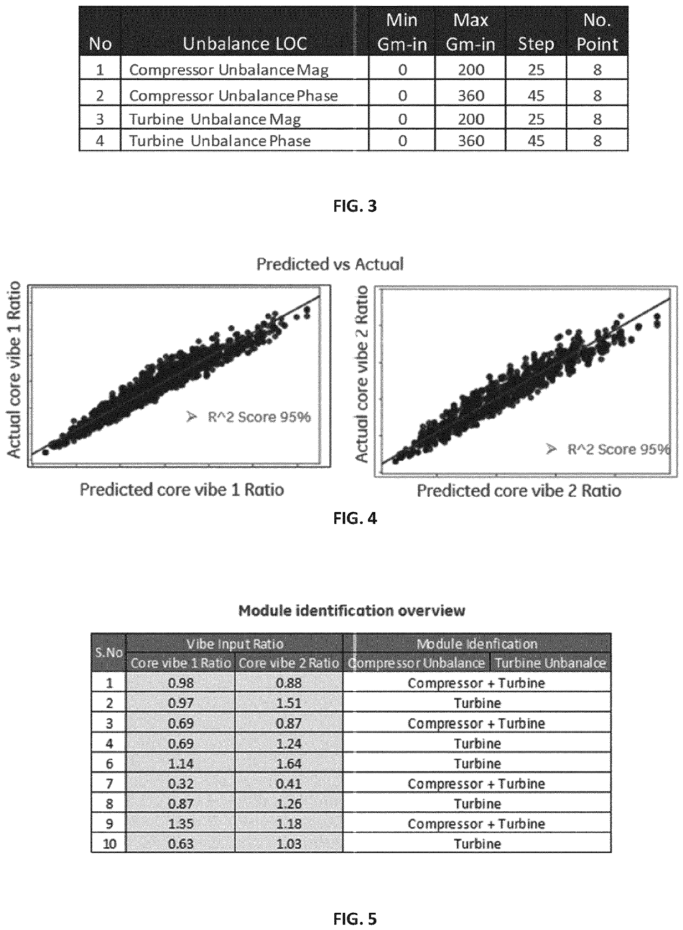

In some embodiments, the predictive model generated in process block 212 can then be analytically validated (process block 214), according to the exemplary procedure illustrated in FIGS. 3-5. As shown in FIG. 3, the exemplary validation process can involve the simulation of unbalance states located in the compressors 112, 114 and/or the turbines 118, 120 of the jet engine 100. As shown in FIG. 4, the validation process can further involve the comparison of identified core vibration ratios to actual core vibration ratios for the simulated unbalance states of the compressors 112, 114 and/or the turbines 118, 120 of the jet engine 100, allowing a user to check the accuracy of the model's correlation between vibration ratios and engine unbalance states. The analytical validation process can also include user input of vibration and/or vibration ratio data as shown in FIG. 5, which will allow the model to predictively identify the source of an unbalance state causing the core vibrations.

The predictive diagnostic model developed according to method 200 can thereafter be used to identify and diagnose the unbalance states that cause future engine vibrations, such as unbalance states and vibrations that may occur in jet engine 100.

In some embodiments of the predictive unbalance state diagnostic method disclosed herein, the method of diagnosing the source of a jet engine unbalance can include the use of the model previously discussed to identify the unbalance state of a jet engine with vibration levels above the acceptable vibration limits associated with that particular engine family and operational parameters. The predicted unbalance state can then be used to define the work scope of engine repair and correction operations. Although the following description of an engine unbalance state identification method 300 proceeds with reference to the jet engine 100 previously described, it should be understood that other jet engines can be diagnosed using the same method.

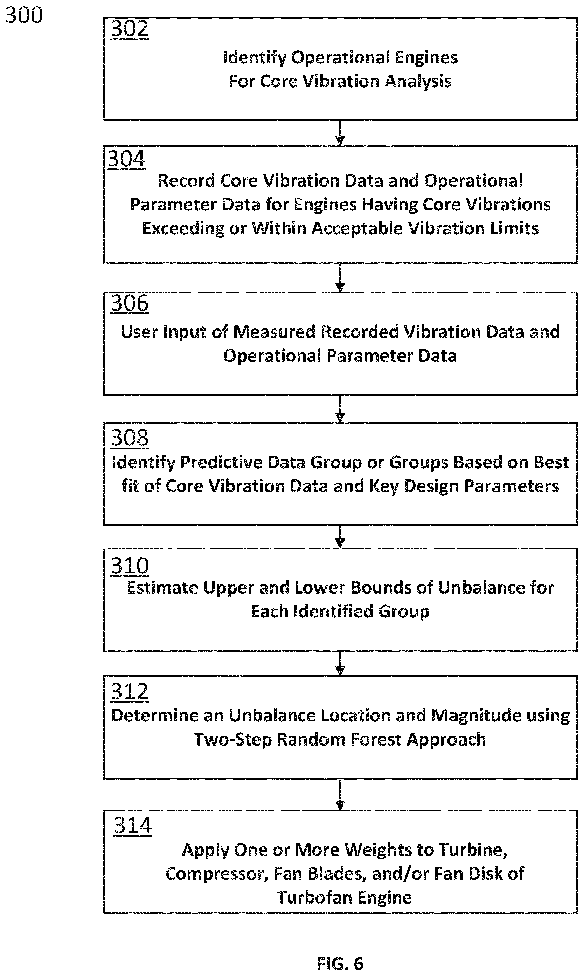

In one embodiment, illustrated in FIG. 6 unbalance state identification method 300, can comprise identifying a jet engine 100 operating for core vibration analysis (process block 302). Core vibration can include location, magnitude and phase of vibrations and can be gathered from the jet engine 100 using, for example, a vibration sensor, and can be recorded, for example, on an on-board flight recorder or transmitted, for example to an MRO facility (process block 304). Operational parameter data for jet engine 100 can also be collected (process block 304). Operational parameter data can be include, for example inlet temperature, outlet temperature, supply pressure, physical properties, chemical properties, ambient temperature, combustor temperature, compressor exit pressure, compressor exit temperature, high pressure rotor speed, low pressure rotor speed, damper manufacturing variation, bearing manufacturing variation, damper operating conditions, bearing operating conditions, engine operator, region of engine operation, and altitude.

In some disclosed embodiments, the core vibration data and operational parameter data can be input by a user into a predictive diagnostic model such as the model developed in process blocks 212 and 214, having linear groups of core vibration-unbalance state data for each given combination of operational parameters in an MRO database (process block 306). For example, input core vibration data can be matched to a linear group of historical unbalance and core vibration ratio data based on the best fit of the measured vibration data and operational parameters for the jet engine 100 (process block 308). In some embodiments, assignment to a linear group can then be accomplished based on known tolerance of parameters and responses. Response tolerance may be calculated as a function of a first actual response, a second actual response, a first predicted response, and a second predicted response. Load tolerance may be calculated as a function of an actual high-pressure compressor imbalance, an actual high-pressure turbine imbalance, a predicted high-pressure compressor imbalance, and a predicted high-pressure turbine imbalance.

With continued reference to FIG. 6, the estimated upper and lower bounds of unbalance for the identified group or groups are then used in a two-step random forest prediction (process block 310). A first unbalance prediction having a first magnitude and a first phase and a second unbalance prediction having a second magnitude and a second phase are plotted against a first core vibration ratio. The first unbalance, the first phase, the second unbalance, the second phase, and the first core vibration ratio are then plotted against a second core vibration ratio. A random forest prediction model is then used to estimate the magnitude and location of the imbalance based on a comparison to historic data values (process block 312).

From the identified magnitude and location of the imbalance determined by the random forest prediction model, an engine repair plan can then be generated which identifies which compressor 112, 114 or turbine 118, 120 should be rebalanced to correct the observed engine vibrations and/or unbalance state, the one or more locations on the engine shafts 124, 126 at which balancing weights should be attached. Weights of the desired mass can then be attached at the one or more identified locations on the engine shafts 124, 126 to correct the observed unbalance state of the jet engine 100. Advantageously, this saves the technician time and fuel costs associated with a conventional trial-and-error approach to identification of the correct engine repair plan and decreases the time at which jet engine 100 must remain in the repair shop when an unacceptably large unbalance or core vibration is observed.

In some embodiments of the predictive engine diagnostic method 300, the accuracy of the identification can then be assessed based on whether the identified unbalance state matched the unbalance state empirically observed during the repair of jet engine 100.

In some embodiments of the disclosed method, data on whether the identification was accurate or inaccurate can be further used to improve the diagnosis model. Returning now to FIG. 2B, the individual analytical models generated in process blocks 214 can, in some embodiments, be adjusted as information is gathered on the accuracy of the identifications generated by the predictive model (process block 220). In one example embodiment, the model is updated to account for both correct and incorrect identifications of the unbalance location in jet engine 100.

In view of the many possible embodiments to which the principles of the disclosed invention may be applied, it should be recognized that the illustrated embodiments are only preferred examples of the invention and should not be taken as limiting the scope of the invention. Rather, the scope of the invention is defined by the following claims. We therefore claim as our invention all that comes within the scope of these claims.

## Claims

1. A method for correcting rotor unbalance of a jet engine (100), comprising:
(a) generating one or more linear groups, based on a database comprising data acquired during operational use of a jet engine,
wherein, for each linear group, there is a linear relationship between vibration ratio data and unbalance state data, wherein a vibration ratio corresponds to a ratio of a measured vibration state to a predetermined maximum amount of vibration, and wherein each linear group is defined for a respective combination of operational parameters (212);
(b) generating one or more individual analytic models for each linear group of vibration ratio-unbalance data (214);
(c) recording a core vibration signature and operational parameter set for a jet engine (304);
(d) inputting the core vibration signature and operational parameter set obtained at step (c) into the one or more individual analytic models of step (b);
(e) identifying a best fit linear relationship group for the input data, based on the core vibration signature and operational parameters (308);
(f) determining an unbalance state for the jet engine by comparing the input core vibration signature to historical vibration signatures recorded for the best fit linear group; and
(g) applying one or more weights to at least one of a compressor, turbine, fan blade, and fan disk, or any combination thereof, of the jet engine based on the determined unbalance state (314);
wherein step (f) further involves using a two-step random forest predictive approach to identify the location, magnitude and a phase component (312) of the core vibration signature; and
wherein the determination of step (f) is further used to define a scope of an engine repair plan and wherein the engine repair plan further comprises determining one or more locations to attach the one or more weights in step (g) to correct the unbalance state (314).

2. The method of claim 1, wherein the unbalance state of step (f) further comprises a location, magnitude and a phase component.

3. The method of any one of the preceding claims, wherein step (e) further comprises estimating an upper bound and a lower bound of possible imbalance values for the best fit linear group (310).

4. The method of any one of the preceding claims, wherein the method further comprises assessing the accuracy of the determination of step (f) (220).

5. The method of any one of the preceding claims, wherein the assessment of the accuracy of the determination of step (f) is further used to update the model and/or the one or more linear vibration ratio-unbalance relationship groups.

## Patentansprüche

1. Verfahren zum Korrigieren der Rotorunwucht eines Strahlmotors (100), Folgendes umfassend:
(a) Erzeugen einer oder mehrerer linearer Gruppen basierend auf einer Datenbank, die Daten umfasst, die während des betrieblichen Einsatzes eines Strahlmotors erfasst wurden,
wobei für jede lineare Gruppe eine lineare Beziehung zwischen Vibrationsverhältnisdaten und Unwuchtzustandsdaten besteht, wobei ein Vibrationsverhältnis einem Verhältnis eines gemessenen Vibrationszustands zu einem vorbestimmten maximalen Vibrationsbetrag entspricht und wobei jede lineare Gruppe für eine jeweilige Kombination von Betriebsparametern (212) definiert ist;
(b) Erzeugen eines oder mehrerer individueller Analysemodelle für jede lineare Gruppe von Vibrationsverhältnis-Unwucht-Daten (214);
(c) Aufzeichnen einer Kernvibrationssignatur und eines Betriebsparametersatzes für einen Strahlmotor (304);
(d) Eingeben der Kernvibrationssignatur und des Betriebsparametersatzes, die bei Schritt (c) erhalten wurden, in das eine oder die mehreren individuellen Analysemodelle aus Schritt (b);
(e) Identifizieren einer am besten angepassten linearen Beziehungsgruppe für die eingegebenen Daten, basierend auf der Kernvibrationssignatur und den Betriebsparametern (308);
(f) Bestimmen eines Unwuchtzustands für den Strahlmotor durch Vergleichen der eingegebenen Kernvibrationssignatur mit historischen Vibrationssignaturen, die für die am besten angepasste lineare Gruppe aufgezeichnet wurden; und
(g) Auftragen eines oder mehrerer Gewichte auf mindestens eines von einem Verdichter, einer Turbine, einer Lüfterschaufel und einer Lüfterscheibe oder einer beliebigen Kombination davon des Strahlmotors basierend auf dem bestimmten Unwuchtzustand (314);
wobei Schritt (f) ferner die Verwendung eines zweistufigen Random-Forest-Vorhersageansatzes zum Identifizieren der Stelle, der Größe und einer Phasenkomponente (312) der Kernvibrationssignatur beinhaltet; und
wobei das Bestimmen aus Schritt (f) ferner verwendet wird, um einen Umfang eines Motorreparaturplans zu definieren, und wobei der Motorreparaturplan ferner das Bestimmen einer oder mehrerer Stellen zum Anbringen des einen oder der mehreren Gewichte in Schritt (g) umfasst, um den Unwuchtzustand (314) zu korrigieren.

2. Verfahren nach Anspruch 1, wobei der Unwuchtzustand aus Schritt (f) ferner eine Stelle, eine Größe und eine Phasenkomponente umfasst.

3. Verfahren nach einem der vorhergehenden Ansprüche, wobei Schritt (e) ferner ein Schätzen einer Obergrenze und einer Untergrenze möglicher Unwuchtwerte für die am besten angepasste lineare Gruppe (310) umfasst.

4. Verfahren nach einem der vorhergehenden Ansprüche, wobei das Verfahren ferner das Bewerten der Genauigkeit der Bestimmung aus Schritt (f) (220) umfasst.

5. Verfahren nach einem der vorhergehenden Ansprüche, wobei das Bewerten der Genauigkeit der Bestimmung aus Schritt (f) ferner verwendet wird, um das Modell und/oder die eine oder die mehreren linearen Vibrationsverhältnis-Unwucht-Beziehungsgruppen zu aktualisieren.

## Revendications

1. Procédé de correction du balourd d'un rotor de moteur à réaction (100), comprenant :
(a) la génération d'un ou plusieurs groupes linéaires, sur la base d'une base de données comprenant des données acquises pendant l'utilisation opérationnelle d'un moteur à réaction,
dans lequel, pour chaque groupe linéaire, il existe une relation linéaire entre des données de rapport vibratoire et des données d'état de balourd, dans lequel un rapport vibratoire correspond au rapport entre un état vibratoire mesuré et une amplitude vibratoire maximale prédéterminée, et dans lequel chaque groupe linéaire est défini pour une combinaison respective de paramètres opérationnels (212) ;
(b) la génération d'un ou de plusieurs modèles analytiques individuels pour chaque groupe linéaire de données de rapport vibratoire-balourd (214) ;
(c) l'enregistrement d'une signature vibratoire du cœur moteur et d'un ensemble de paramètres opérationnels pour un moteur à réaction (304) ;
(d) l'introduction de la signature vibratoire du cœur moteur et de l'ensemble de paramètres de fonctionnement obtenus à l'étape (c) dans le ou les modèles analytiques individuels de l'étape (b) ;
(e) l'identification d'un groupe de relations linéaires présentant la meilleure correspondance pour les données d'entrée, sur la base de la signature vibratoire du cœur moteur et des paramètres opérationnels (308) ;
(f) la détermination d'un état de balourd du moteur à réaction par comparaison de la signature vibratoire du cœur moteur d'entrée avec des signatures vibratoires historiques enregistrées pour le groupe linéaire présentant la meilleure correspondance ; et
(g) l'application d'une ou de plusieurs masselottes à au moins l'un des éléments suivants : un compresseur, une turbine, une aube de soufflante et un disque de soufflante, ou toute combinaison de ceux-ci, du moteur à réaction sur la base de l'état de balourd déterminé (314) ;
dans lequel l'étape (f) implique en outre l'utilisation d'une approche prédictive à forêt aléatoire en deux étapes afin d'identifier la localisation, l'amplitude et une composante de phase (312) de la signature vibratoire du cœur moteur ; et
dans lequel la détermination de l'étape (f) est en outre utilisée pour définir l'étendue d'un plan de réparation du moteur et dans lequel le plan de réparation du moteur comprend en outre la détermination d'un ou plusieurs emplacements de fixation de la ou des masselottes de l'étape (g) afin de corriger l'état de balourd (314).

2. Procédé selon la revendication 1, dans lequel l'état de balourd de l'étape (f) comprend en outre une localisation, une amplitude et une composante de phase.

3. Procédé selon l'une des revendications précédentes, dans lequel l'étape (e) comprend en outre l'estimation d'une limite supérieure et d'une limite inférieure de valeurs de balourd possibles pour le groupe linéaire présentant la meilleure correspondance (310).

4. Procédé selon l'une des revendications précédentes, dans lequel le procédé comprend en outre l'évaluation de la précision de la détermination de l'étape (f) (220).

5. Procédé selon l'une des revendications précédentes, dans lequel l'évaluation de la précision de la détermination de l'étape (f) est en outre utilisée pour mettre à jour le modèle et/ou le ou les groupes de relations linéaires rapport vibratoire-balourd.
